Europäisches Patentamt

European Patent Office

Office européen des brevets

(19)

(11) **EP 1 337 582 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.⁷: **C08L 21/00**

(21) Anmeldenummer: **01987776.0**

(22) Anmeldetag: **08.10.2001**

(86) Internationale Anmeldenummer:
**PCT/EP2001/011588**

(87) Internationale Veröffentlichungsnummer:
**WO 2002/032990 (25.04.2002 Gazette 2002/17)**

(54) **KAUTSCHUKGELE UND PHENOLHARZEDUKTE ENTHALTENDE KAUTSCHUKMISCHUNGEN**

RUBBER MIXTURES CONTAINING RUBBER GELS AND PHENOLIC RESIN EDUCTS

MELANGES CONTENANT DES GELS CAOUTCHOUTEUX ET DES RESINES PHENOLIQUES

(84) Benannte Vertragsstaaten:
**DE ES FR GB IT**

(30) Priorität: **20.10.2000 DE 10052287**

(43) Veröffentlichungstag der Anmeldung:
**27.08.2003 Patentblatt 2003/35**

(73) Patentinhaber: **LANXESS Deutschland GmbH
51369 Leverkusen (DE)**

(72) Erfinder:
• **OBRECHT, Werner
47447 Moers (DE)**
• **SUMNER, Anthony
51061 Köln (DE)**

(56) Entgegenhaltungen:
**EP-A- 1 020 492          DE-A- 19 701 487
FR-A- 1 442 858**

EP 1 337 582 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft Kautschukmischungen, die neben den üblichen Mischungsbestandteilen vernetzte Kautschukpartikel (sogenannte Kautschukgele), Phenolharzedukte oder Phenol/Aldehyd-Kondensationsprodukte enthalten und sich im unvernetzten Zustand durch gute Verarbeitbarkeit (Compoundviskosität - ML 1+4/100°C ≤ 60 ME) und im vulkanisierten Zustand durch Shore A-Härten/23°C ≥60, Spannungswerte bei 100% Dehnung ($S_{100}$) ≥3,0 Mpa sowie durch hohe Rückprallelastizitäten bei 70°C (E70°C >60%) auszeichnen. Darüber hinaus besitzen die aus den erfindungsgemäßen Kautschukmischungen hergestellten Vulkanisate eine niedrigere Dichte, was sich vorteilhaft auf das Gewicht der aus den Vulkanisaten hergestellten Kautschukformkörper, insbesondere bei Reifen bzw. bei Reifenteilen, auswirkt.

Es ist bekannt, dass Kautschukmischungen aus unvernetzten Kautschuken und vernetzten Kautschukpartikeln (Kautschukgele) ein niedriges spezifisches Gewicht und niedrige Mischungsviskositäten aufweisen und bei der Vulkanisation mit üblichen Vulkanisationsmitteln (z.B. Schwefelwlkanisation) Vulkanisate ergeben, die hohe Rückprallelastizitäten bei 70°C und daher eine niedrige Dämpfung unter Gebrauchsbedingungen aufweisen.

Verwiesen wird in diesem Zusammenhang beispielsweise auf US-A 5 124 408, US-A 5 395 891, DE-A 197 01 488.7, DE-A 197 01 487.9, DE-A 199 29 347.3, DE-A 199 39 865.8, DE-A 199 42 620.1 und DE-A 19701487.1.

Für den technischen Einsatz sind die mechanischen Eigenschaften gelhaltiger Kautschukvulkanisate insbesondere aufgrund einer mangelhaften Verstärkungswirkung der Mikrogele nicht ausreichend. Insbesondere ist eine Verbesserung des Spannungswerts bei 100% Dehnung ($S_{100}$), der Bruchdehnung (D) und der Reißfestigkeit (F) notwendig. Diese Verbesserungen sollen erreicht werden, ohne dass die vorteilhaften Mischungsviskositäten der unvulkanisierten Kautschukmischungen verschlechtert werden.

Die Verwendung von Phenolharzedukten, wie Resorcin und Formaldehydspendern, wie Hexamethylentetramin, für die Herstellung sogenannter Haftmischungen ist bekannt. Mit Hilfe dieser Haftsysteme wird in Verbundartikeln die Haftung der Kautschukmischung an Festigkeitsträger, wie Metallcord, Glasgeweben, Geweben aus Polyamid bzw. aus Polyester, erreicht (Kautschukhandbuch für die Gummiindustrie der Bayer AG, 1991, S. 499 - 531). In der publizierten Literatur wird allerdings die Verwendung von Phenolharzedukten sowie kondensierter Phenolharze zur Verbesserung der mechanischen Eigenschaften (Spannungswert, Bruchdehnung, Reißfestigkeit) ohne Einbußen in der Verarbeitbarkeit (Mischungsviskosität) von Kautschukmischungen, die Kautschukgele enthalten, nicht gelehrt.

Es bestand daher die technische Notwendigkeit, Maßnahmen zur Erhöhung des mechanischen Werteniveaus gelhaltiger Kautschukvulkanisate insbesondere des Produkts aus Spannungswert bei 100% Dehnung und Bruchdehnung ($S_{100}$ x D) zu finden, wobei durch diese Maßnahmen einerseits die Compoundviskosität der unvulkanisierten Mischungen und andererseits die Reißfestigkeit der Vulkanisate nicht verschlechtert werden sollten.

Gegenstand der vorliegenden Erfindung sind daher Kautschukmischungen bestehend aus nicht vernetzten, doppelbindungshaltigen Kautschuken (A), vernetzten Kautschukpartikeln auf Basis von BR - und SBR - Kautschuken (B) sowie Phenolharzedukten oder kondensierten Phenolharzen (C), wobei die doppelbindungshaltigen Kautschuke (A) in Mengen von 100 Gew.-Teilen, die vernetzten Kautschukpartikel (B) in Mengen von 10 bis 150 Gew.-Teilen, bevorzugt 20 bis 120 Gew.-Teilen, und die Menge an Phenolharzedukten oder kondensierten Phenolharzen (C), in Mengen von 0,1 bis 50 Gew.-Teilen, bevorzugt 0,5 bis 30 Gew.-Teilen, vorhanden sind.

Die erfindungsgemäßen Kautschuke können selbstverständlich noch zusätzliche Füllstoffe sowie Kautschukhilfsmittel der bekannten Art enthalten.

Bestandteil (A) der erfindungsgemäßen Kautschukmischungen sind doppelbindungshaltige Kautschuke, die nach DIN/ISO 1629 als R-Kautschuke bezeichnet werden. Diese Kautschuke haben in der Hauptkette eine Doppelbindung. Hierzu gehören beispielsweise:

NR:       Naturkautschuk
IR:       Polyisopren
SBR:      Styrol/Butadienkautschuk
BR:       Polybutadienkautschuk
NBR:      Nitrilkautschuk
IIR:      Butylkautschuk
BIIR:     bromierte Isobutylen/Isopren-Copolymerisate mit Bromgehalten von 0,1-10 Gewichtsprozent
CIIR:     chlorierte Isobutylen/Isopren-Copolymerisate mit Chlorgehalten von 0,1-10 Gewichtsprozent
HNBR:     Hydrierter bzw. teilhydrierter Nitrilkautschuk
SNBR:     Styrol/Butadien/Acrylnitril-Kautschuk
SIBR:     Styrol/Isopren/Butadien-Kautschuk
CR:       Polychloropren
ENR:      Epoxydierter Naturkautschuk oder Mischungen davon
X-NBR:    carboxylierte Nitrilkautschuke

X-SBR:     carboxylierte Styrol-Butadien-Copolymerisate.

Unter doppelbindungshaltigen Kautschuken sollen aber auch solche Kautschuke verstanden werden, die nach DIN/ISO 1629 als M-Kautschuke bezeichnet werden und neben der gesättigten Hauptkette Doppelbindungen in der Seitenkette aufweisen. Hierzu gehört z.B. EPDM.

Die in die erfindungsgemäßen Kautschukmischungen einzusetzenden doppelbindungshaltigen Kautschuke der oben genannten Art können selbstverständlich durch solche funktionelle Gruppen modifiziert sein, die mit Phenolharzedukten oder mit präkondensierten Phenolharzedukten reagieren und - wie nachfolgend noch beschrieben wird - die Ankopplung der vernetzten Kautschukpartikel an die umgebende Kautschukmatrix im vulkanisierten Zustand zu verbessern vermögen.

Besonders bevorzugt sind insbesondere solche nicht vernetzten Kautschuke, die durch Hydroxyl-, Carboxyl-, Amino-, Amido- und/oder Epoxidgruppen funktionalisiert sind. Die Einführung funktioneller Gruppen kann direkt bei der Polymerisation durch Copolymerisation mit geeigneten Comonomeren oder nach der Polymerisation durch Polymermodifikation erfolgen.

Die Einführung solcher funktioneller Gruppen durch Polymermodifikation ist bekannt und beispielsweise beschrieben in M.L. Hallensleben "Chemisch modifizierte Polymere" in Houben-Weyl Methoden der Organischen Chemie, 4. Auflage, "Makromolekulare Stoffe" Teil 1-3; Georg Thieme Verlag Stuttgart, New York, 1987; S. 1994-2042, DE-A 2 653 144, EP-A 464 478, EPA 806 452 und Deutsche Patentanmeldung DE. 198 32 459.6.

Die Menge an funktionellen Gruppen in den Kautschuken beträgt üblicherweise 0,05 bis 25 Gew.%, bevorzugt 0,1 bis 10 Gew.%.

Bestandteil (B) der erfindungsgemäßen Kautschukmischungen sind vernetzte Kautschukpartikel, sogenannte Kautschukgele oder Mikrogele, die durch entsprechende Vernetzung folgender Kautschuke erhalten werden:

BR:     Polybutadien,

SBR:    Styrol-Butadien-Copolymerisate mit Styrolgehalten von 1-60, vorzugsweise 5-50 Gewichtsprozent,

Die erfindungsgemäß einzusetzenden Kautschukpartikel besitzen üblicherweise Teilchendurchmesser von 5 bis 1000 nm, bevorzugt 10 bis 600 nm (Durchmesserangaben nach DIN 53 206).

Aufgrund ihrer Vernetzung sind sie (nahezu) unlöslich und in geeigneten Fällmitteln, z.B. Toluol, quellbar. Der (unlösliche) Gelanteil der Kautschukpartikel beträgt üblicherweise 80 bis 100 Gew.%, bevorzugt 90 bis 100 Gew.%. Der Quellungsindex der Kautschukpartikel ($Q_i$) in Toluol beträgt ca. 1 bis 15, vorzugsweise 1 bis 10.

Der Quellungsindex Qi wird definiert als:

$$Qi = \frac{\text{Nassgewicht des toluohaltigen Gels}}{\text{Trockengewicht des Gels}}$$

Zur Ermittlung von Gelgehalt und Quellungsindex lässt man 250 mg Gel in 25 ml Toluol 24 h unter Schütteln quellen. Der (unlösliche) Gelanteil wird mit 20 000 Upm abzentrifugiert und gewogen (Nassgewicht des toluolhaltigen Gels) und anschließend bei 70°C bis zur Gewichtskonstanz getrocknet und nochmals gewogen.

Die Herstellung der einzusetzenden vernetzten Kautschukpartikel (Kautschukgele) aus den zugrundeliegenden Kautschuken der zuvor genannten Art, ist prinzipiell bekannt und beispielsweise beschrieben in US-A 5 395 891 und EP-A 981 000 49.0.

Außerdem ist es möglich, die Teilchengrößen der Kautschukpartikel durch Agglomeration zu vergrößern. Auch die Herstellung von Kieselsäure/Kautschuk-Hybridgelen durch Coagglomeration ist beispielsweise beschrieben in der deutschen Patentanmeldung DE-A 199 39 865.8.

Selbstverständlich können die vernetzten Kautschukpartikel wie die zuvor erwähnten nicht vernetzten doppelbindungshaltigen Kautschuke ebenfalls durch geeignete funktionelle Gruppen modifiziert sein, die - wie zuvor erwähnt - mit Phenolharzedukten oder mit präkondensierten Phenolharzedukten zu reagieren vermögen und/oder eine Verbesserung der Ankopplung der Kautschukpartikel an die umgebende Kautschukmatrix im vulkanisierten Zustand bewirken.

Besonders bevorzugt werden in den erfindungsgemäßen Kautschukmischungen modifizierte vernetzte Kautschukpartikel eingesetzt, die an der Oberfläche durch Hydroxyl-; Carboxyl-; -Amino-; Amido- sowie durch Epoxid-Gruppen modifiziert sind und in dem zuvor erwähnten Mengenbereich liegen.

Die Modifizierung der vernetzten Kautschukpartikeln (Kautschukgelen) und die Einführung der zuvor genannten funktionellen Gruppen ist dem Fachmann ebenfalls bekannt und beispielsweise beschrieben in den deutschen Patentanmeldungen Nr. 199 19 459.9, 199 29 347.3, 198 34 804.5.

Zu erwähnen sei an dieser Stelle nur die Modifizierung der entsprechenden Kautschuke bzw. Kautschukgele in wässriger Dispersion mit entsprechenden polaren Monomeren, die eine Hydroxyl-, Amino-, Amido- Carboxyl- und/oder Epoxidgruppe in die Kautschuke einzuführen vermögen.

Bestandteil (C) der erfindungsgemäßen Kautschukmischungen sind Phenolharzedukte oder präkondensierte Phenolharzedukte. Sie sind beispielsweise im Kapitel "Phenolharze" von Ullmanns Encyclopädie der technischen Chemie beschrieben (4. Neubearbeitete und erweiterte Auflage, Band 18, Verlag Chemie GmbH, Weinheim, 1979, S. 245-257) beschrieben. Als Phenolharzedukte werden Phenol und Phenolderivate sowie Aldehyde und Aldehydderivate verstanden.

Infrage kommen neben Phenol, alkylierte Phenole, Kresole, Bisphenol A, Resorcin sowie Formaldehyd insbesondere in verkappter Form als Paraformaldehyd und als Hexamethylentetramin sowie höhere Aldehyde, wie Butyraldehyd, Benzaldehyd, Salicylaldehyd, Acrolein, Crotonaldehyd, Acetaldehyd und Glyoxal. Besonders geeignet sind Gemische aus Phenol bzw. Resorcin mit Paraformaldehyd und/oder Hexamethylentetramin.

Anstelle der Phenolharzedukte können auch die Kondensationsprodukte aus Phenolen und Aldehyden eingesetzt werden. Diese sind als Novolake und Resole bekannt ("Phenolharze" in Ullmanns Encyclopädie der technischen Chemie, 4. neubearbeitete und erweiterte Auflage, Band 18, Verlag Chemie GmbH, Weinheim, 1979, S. 245-257). Besonders geeignet sind Novolake und Resole auf Basis von Phenol und/oder Resorcin und Formaldehyd.

Die erfindungsgemäßen Kautschukmischungen können neben den Mischungsbestandteilen (A), (B) und (C) weitere Füllstoffe und Kautschukhilfsmittel enthalten.

Besonders geeignete Füllstoffe zur Herstellung der erfindungsgemäßen Kautschukmischungen und -vulkanisate sind:

- Ruße. Die hierbei zu verwendenden Ruße sind nach dem Flammruß-, Furnace- oder Gasrußverfahren hergestellt und besitzen BET-Oberflächen von 20-200 $m^2$/g wie z.B: SAF-, ISAF-, IISAF-, HAF-, FEF- oder GPF-Ruße.

- Kieselsäure hergestellt z.B. durch Fällungen von Lösungen von Silikaten oder Flammhydrolyse von Siliciumhalogeniden mit spezifischen Oberflächen von 5-1000, vorzugsweise 20-400 $m^2$/g (BET-Oberfläche) und Primärteilchengrößen von 5-400 nm. Die Kieselsäuren können gegebenenfalls auch als Mischoxide mit anderen Metalloxiden, wie Al-, Mg-, Ca-, Ba, Zn- und Ti Oxiden vorliegen. Bei Verwendung von Kieselsäuren werden diese vorzugsweise in aktivierter Form, d.h. in Kombination mit Verbindungen wie Bis(tri-ethoxy-silyl-propyl-disulfan), z.B. Si®69 der Fa. Degussa-Hüls, in Mengen von 0,5 - 20 Gew.-Teilen, vorzugsweise 1 -10 Gew.-Teilen eingesetzt.

- synthetische Silikate, wie Aluminiumsilikat, Erdalkalisilikat, wie Magnesiumsilikat oder Calciumsilikat mit BET-Oberflächen von 20-400 $m^2$/g und Primärteilchendurchmessern von 5-400 nm.

- natürliche Silikate, wie Kaolin und andere natürlich vorkommende Kieselsäuren.

- Metalloxide, wie Zinkoxid, Calciumoxid, Magnesiumoxid, Aluminiumoxid.

- Metallcarbonate, wie Calciumcarbonat, Magnesiumcarbonat, Zinkcarbonat.

- Metallsulfate, wie Calciumsulfat, Bariumsulfat.

- Metallhydroxide, wie Aluminiumhydroxid und Magnesiumhydroxid.

- Glasfasern und Glasfaserprodukte (Latten, Stränge oder Mikroglaskugeln).

- Thermoplastfasern (Polyamid, Polyester, Aramid)

- Thermoplastische Füllstoffe, wie Polyethylen, Polypropylen, Polytetrafluorethylen, syndiotaktisches 1,2-Polybutadien, trans-1,4-Polybutadien, syndiotaktisches Polystyrol sowie Polycarbonat.

Die erfindungsgemäßen Kautschukmischungen enthalten weitere Kautschukhilfsmittel, wie Vernetzer, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Harze, Streckmittel, organische Säuren, Verzögerer, Metalloxide, sowie Füllstoffaktivatoren, wie beispielsweise Triethanolamin, Polyethylenglykol, Hexantriol, Bis-(triethoxisilylpropyl)-Tetrasulfid oder anderen, die der Gummiindustrie bekannt sind.

Die Kautschukhilfsmittel werden in üblichen Mengen, die sich u.a. nach dem Verwendungszweck richten, eingesetzt. Übliche Mengen sind z. B. Mengen von 0,1-50 Gewichts-Teile, bezogen auf eingesetzte Mengen an Kautschuk (A).

Als Vernetzer können üblicherweise Schwefel, Schwefelspender, Peroxide oder andere Vernetzungsmittel, wie beispielsweise Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid und/oder Triallyltrimellitat, verwendet werden. Darüber hinaus kommen in Betracht die Acrylate und Methacrylate von mehrwertigen, vorzugsweise 2 bis 4-wertigen $C_2$ bis $C_{10}$ Alkoholen, wie Ethylenglykol, Propandiol-1,2-butandiol, Hexandiol, Polyethylenglykol mit 2 bis 20, vorzugsweise 2 bis 8 Oxyethyleneinheiten, Neopentylglykol, Bisphenol-A, Glycerin, Trimethlypropan, Pentaerythrit, Sorbit mit ungesättigten Polyestern aus aliphatischen Di- und Polyolen sowie Maleinsäure, Fumarsäure und/oder Itaconsäure. Die Menge der Vernetzer beträgt üblicherweise 0,1 - 20 Gew.-Teile, vorzugsweise 0,1 - 10 Gew.-Teile, bezogen auf die gesamte Menge an Kautschuk.

Die erfindungsgemäßen Kautschukmischungen können darüber hinaus Vulkanisationsbeschleuniger enthalten. Beispiele für geeignete Vulkanisationsbeschleuniger sind z.B. Mercaptobenzthiazole, -Sulfenamide, Guanidine, Thiurame, Dithiocarbamate, Thioharnstoffe, Thiocarbonate sowie Dithiophosphate. Die Vulkanisationsbeschleuniger, Schwefel, Schwefelspender, Peroxide oder weitere Vemetzungsmittel, wie beispielsweise dimeres 2,4-Toluyliden-diisocyanat (= Desmodur TT) oder 1,4-bis-1-ethoxyhydrochinon (= Vernetzer 30/10) werden in Mengen von 0,1-40 Gewichtsteile, bevorzugt 0,1-10 Gewichtsteile, bezogen auf die gesamte Menge an Kautschuk, eingesetzt.

Die Herstellung der erfindungsgemäßen Kautschukmischungen erfolgt durch Mischen der Einzelkomponenten in geeigneten Aggregaten, wie Walzen, Innenmischern oder auch Mischextrudern. Bevorzugte Mischtemperaturen liegen bei ca. 50-180°C.

Auch der Einsatz vorgefertigter Mischungen von Einzelkomponenten z. B. in der Form von Masterbatches ist möglich. Die Herstellung von Gel/Kautschuk Masterbatches erfolgt beispielsweise im Latexzustand durch das Mischen der Latices unvernetzter Kautschuke und von Kautschukgelen. Die Isolierung der so hergestellten Masterbatchkomponenten kann wie üblich durch Eindampfen, Ausfällen oder Gefrierkoagulation (US-A 2,187,146) erfolgen. Durch Einmischen weiterer Komponenten, wie Füllstoffen, Phenolharzen, in die Latexmischung und anschließende Aufarbeitung können geeignete Masterbatches sowie direkt die erfindungsgemäßen Kautschuk-Formulierungen erhalten werden.

Die Vulkanisation der erfindungsgemäßen Kautschukmischungen erfolgt bei Temperaturen von 100-250°C, bevorzugt 130-180°C, gegebenenfalls unter Druck von 10-200 bar.

Ein weiterer Gegenstand der Erfindung ist die Verwendung der Kautschukmischungen zur Herstellung von Kautschukvulkanisaten, die zur Herstellung von Kautschukformkörpern dienen.

Die Vulkanisate eignen sich insbesondere für die Herstellung technischer Gummiartikel und für verschiedene Reifenbauteile. Beispielsweise seien genannt: Walzenbeläge, Beläge von Förderbändern, Riemen, Spinnkopse, Dichtungen, Golfballkerne, Schuhsohlen sowie verschiedene Reifenbauteile, wie Wulstmischungen, Reifenkarkassen, SubTread-Mischungen und Reifenseitenwände. Besonders geeignet sind die Mischungen für die Herstellung verstärkter Seitenwände von Reifen mit Notlaufeigenschaften ("inserts for run flat tyres").

## Beispiele

Die Herstellung der Kautschukgele und der Gel/Kautschuk-Masterbatches, die für die Untersuchungen eingesetzt werden, ist bereits an anderer Stelle im Detail beschrieben. Aus diesem Grund wird hier nur auf die relevanten Patente bzw. Anmeldungen verwiesen.

KA 650/19 ist der NR-Masterbatch eines SBR-Gels. Der Masterbatch enthält SBR-Gel und NR im Gewichtsverhältnis 50/50. Die Herstellung des SBR-Gels und des NR-Masterbatches erfolgt wie in EP 854 170 A1 Beispiel 1, beschrieben. Charakteristische Daten des Produkts sind in nachfolgender Tabelle zusammengestellt.

KA 8648/47 ist der NR-Masterbatch eines BR-Gels. Der Masterbatch enthält BR-Gel und NR im Gewichtsverhältnis 70/30. Die Herstellung des BR-Gels erfolgt wie in US 5 395 891 beschrieben, wobei für die Vernetzung mit Dicumylperoxid 1,5 phr (parts per one hundred parts of rubber) eingesetzt werden. Die Herstellung des Masterbatches erfolgt in analoger Weise zu EP 854 170 A1. Charakteristische Daten des Produkts sind in nachfolgender Tabelle zusammengestellt.

| NR-Materbatch | Gewichtsanteile Gel/ NR | Charakteristische Merkmale des Kautschukgels | | | | | |
|---|---|---|---|---|---|---|---|
| | | DCP [phr] | Durchmesser d50 [nm] | Gel- gehalt [%] | QI | Tg [°C] | Dichte [g/ cm³] |
| KA 8648/47 | 70/30 | 1,5 | 118 | 97 | 6,1 | -63 | 0,9433 |
| KA 8650/19 | 50/50 | 1,5 | 56 | 98 | 4,9 | -23 | 0,9819 |

**Compoundherstellung, Vulkanisation und Eigenschaften der Vulkanisate**

Hierzu werden die Mischungskomponenten gemäß nachfolgenden Rezepturen auf der Walze in der angegebenen Reihenfolge gemischt, vulkanisiert und charakterisiert:

**Mischungsserie A:**

In dieser Mischungsserie wird gezeigt, dass das Verarbeitungsverhalten (Compoundviskosität ML 1+4/100°C und Mooneyrelaxation MR 30) sowie die mechanischen Eigenschaften insbesondere $S_{100}$ x D und die Reißfestigkeit von Kautschukcompounds, die BR-Gele und Kieselsäure enthalten, sowohl durch Zusätze von Resorcin als auch durch Zusätze von Resorcin und Hexamethylentetramin verbessert werden.

| Mischungs-Nr.: | 1 | 2 | 3 | 4 |
|---|---|---|---|---|
| Naturkautschuk[1] | 34 | 34 | 34 | 34 |
| BR-Gel KA 8648/ (70 Gew.% in NR) | 86 | 86 | 86 | 86 |
| Buna CB® 65 [2] | 40 | 40 | 40 | 40 |
| Ruß N 330 | 2 | 2 | 2 | 2 |
| Silica VN 3 | 30 | 30 | 30 | 30 |
| Si 69® [3] | 5 | 5 | 5 | 5 |
| Cohedur RS [4] | 0 | 5 | 5 | 5 |
| Renopol L [5] | 5 | 5 | 5 | 5 |
| Zinkoxid | 5 | 5 | 5 | 5 |
| Stearinsäure | 2 | 2 | 2 | 2 |
| TMQ [6] | 1,5 | 1,5 | 1,5 | 1,5 |
| 6PPD [7] | 2,5 | 2,5 | 2,5 | 2,5 |
| Schwefel | 3 | 3 | 3 | 3 |
| CBS [8] | 2 | 2 | 2 | 2 |
| Cohedur H 30 [9] | 0 | 0 | 3 | 1 |

1) = SMR 5 (Standard Malaysian Rubber)

2) = Sternförmig verzweigter Polybutadienkautschuk der Bayer AG

3) = Bis(tri-ethoxy-silyl-propyl-disulfan) (Si 69® der Degussa AG)

4)) = Abgekühlte Schmelze aus 66,5% Resorcin und 33,5 Stearinsäure (Cohedur® RS der Bayer AG)

5) = Weichmacher auf Mineralölbasis

6) = 2,2,4-Trimethyl-1,2-dihydrochinolin (Vulkanox® HS der Bayer AG)

7) =N-1,3-Dimethylbutyl-N'-phenyl-p-phenylendiamin (Vulkanox® 4020 NA der Bayer AG)

8) = N-Cyclohexyl-2-benzthiazylsulfenamid (Vulkacit® CZ der Bayer AG)

9) = Hexamethylentetramin mit 3 Gew.% amorpher Kieseläure (Cohedur® H 30 der Bayer AG)

Zur Charakterisierung der Eigenschaften des unvernetzten Compounds werden folgende Messgrößen herangezogen: Mooneyviskosität ML 1+4 (100°C); Mooneyrelaxation MR 30 und Mooneyscorch bei 130°C bestimmt.

| Mischungs-Nr.: | 1 | 2 | 3 | 4 |
|---|---|---|---|---|
| ML 1 + 4 (100°C) [ME] | 66,8 | 45,9 | 53,2 | 49,6 |
| MR 30 [%] | 16,8 | 8,1 | 9,2 | 9,7 |

Auf der Basis o.g. Compounds werden nach 15 Min. Vulkanisationszeit bei 165°C folgende Prüfergebnisse erhalten:

| Mischungs-Nr.: | 1 | 2 | 3 | 4 |
|---|---|---|---|---|
| Zugfestigkeit [MPa] | 7,3 | 7,8 | 8,1 | 9,3 |
| Bruchdehnung [%] | 170 | 190 | 140 | 175 |
| Spannungswert/50% [MPa] | 1,9 | 2,0 | 2,7 | 2,2 |
| Spannungswert/100% [MPa] | 3,6 | 3,6 | 5,3 | 4,3 |
| Härte Shore A, 23°C | 68 | 69 | 75 | 72 |
| Härte Shore A, 70°C | 67 | 68 | 74 | 71 |
| Rückprallelastizität, 23°C [%] | 60 | 57 | 58 | 56 |
| Rückprallelastizität, 70°C [%] | 73 | 69 | 71 | 68 |
| Goodrich Flexometer delta T [°C] | 12,8 | 12,8 | 14,3 | 13,9 |
| Goodrich Flexometer T [°C] | 122,9 | 130,1 | 126,2 | 125,8 |
| tan $\delta$/60°C | 0,047 | 0,053 | 0,040 | 0,047 |
| $S_{100}$ x D | 612 | 684 | 742 | 752 |

**Mischungsserie B:**

In dieser Mischungsserie wird gezeigt, dass das Verarbeitungsverhalten (Compoundviskosität ML 1+4/100°C und Mooneyrelaxation MR 30) sowie die mechanischen Eigenschaften insbesondere $S_{100}$ x D und die Reißfestigkeit von kieselsäurefreien Kautschukcompounds, die entweder BR-Gel oder SBR-Gel enthalten, sowohl durch Zusätze von Resorcin als auch durch Zusätze von Resorcin und Hexamethylentetramin verbessert werden.

| Mischungs-Nr.: | 5 | 6 | 7 | 8 |
|---|---|---|---|---|
| Naturkautschuk[1] | 74 | 74 | 40 | 40 |
| BR-Gel KA 8648 (70 Gew.% in NR) | 86 | 86 | | |
| SBR-Gel KA 8650/19 (50 Gew.% in NR) | | | 120 | 120 |
| Ruß N 330 | 2 | 2 | 2 | 2 |
| Koresin[2] | 2 | 2 | 2 | 2 |
| Cohedur RS[3] | 5 | 0 | 5 | 0 |
| Renopol L [4] | 5 | 5 | 5 | 5 |
| Zinkoxid | 5 | 5 | 5 | 5 |
| Stearinsäure | 2 | 2 | 2 | 2 |
| TMQ [5] | 1,5 | 1,5 | 1,5 | 1,5 |
| 6PPD [6] | 2,5 | 2,5 | 2,5 | 2,5 |
| Schwefel | 5 | 5 | 5 | 5 |
| CBS [7] | 2,5 | 2,5 | 2,5 | 2,5 |
| Cohedur H 30 [8] | 3 | 0 | 3 | 0 |

1) = SMR 5 (Standard Malaysian Rubber)

2) = Kondensationsprodukt aus t-Butylphenol und Acetylen

3) = Abgekühlte Schmelze aus 66,5% Resorcin und 33,5 Stearinsäure (Cohedur® RS der Bayer AG)

4) = Weichmacher auf Mineralölbasis

5) = 2,2,4-Trimethyl-1,2-dihydrochinolin (Vulkanox® HS der Bayer AG)

6) = N-1,3-Dimethylbutyl-N'-phenyl-p-phenylendiamin (Vulkanox® 4020 NA der Bayer AG)

7) = N-Cyclohexyl-2-benzthiazylsulfenamid (Vulkacit® CZ der Bayer AG)

8) = Hexamethylentetramin mit 3 Gew.% amorpher Kieseläure (Cohedur® H 30 der Bayer AG)

Zur Charakterisierung der Eigenschaften des unvernetzten Compounds werden folgende Messgrößen herangezogen: Mooneyviskosität ML 1+4 (100°C); Mooneyrelaxation MR 30 und Mooneyscorch bei 130°C bestimmt.

| Mischungs-Nr.: | 5 | 6 | 7 | 8 |
|---|---|---|---|---|
| ML 1 + 4 (100°C) [ME] | 15,9 | 22,3 | 20,4 | 28,1 |
| MR 30 [%] | 1,3 | 1,3 | 1,0 | 2,1 |

Auf der Basis o.g. Compounds werden nach 15 Min. Vulkanisationszeit bei 165°C folgende Prüfergebnisse erhalten:

| Mischungs-Nr.: | 5 | 6 | 7 | 8 |
|---|---|---|---|---|
| Zugfestigkeit [MPa] | 6,4 | 5,5 | 12,4 | 11,9 |
| Bruchdehnung [%] | 160 | 165 | 250 | 255 |
| Spannungswert/50% [MPa] | 1,6 | 1,3 | 2,4 | 2,0 |
| Spannungswert/100% [MPa] | 3,5 | 2,6 | 4,4 | 3,4 |
| Härte Shore A, 23°C | 65 | 61 | 74 | 68 |
| Härte Shore A, 70°C | 64 | 61 | 67 | 63 |
| Rückprallelastizität, 23°C [%] | 58 | 60 | 33 | 35 |
| Rückprallelastizität, 70°C [%] | 73 | 76 | 60 | 65 |
| Goodrich Flexometer delta T [°C] | 6,0 | 5,3 | 10,6 | 9,0 |
| Goodrich Flexometer T [°C] | 110,6 | 106,4 | 118,5 | 117,7 |
| tan $\delta$/60°C | 0,027 | 0,017 | 0,079 | 0,053 |
| $S_{100}$xD | 560 | 429 | 1100 | 867 |

**Patentansprüche**

1. Kautschukmischungen bestehend aus nicht vernetzten, doppelbindungshaltigen Kautschuken (A), vernetzten Kautschukpartikeln auf Basis von BR-und SBR-Kautschuken (B) sowie Phenolharzedukten oder kondensierten Phenolharzen (C), wobei die doppelbindungshaltigen Kautschuke (A) in Mengen von 100 Gew.-Teilen, die vernetzten Kautschukpartikel (B) in Mengen von 10 bis 150 Gew.-Teilen und die Phenolharzedukte oder kondensierten Phenolharze (C) in Mengen von 0,1 bis 50 Gew.-Teilen vorhanden sind.

2. Kautschukmischungen nach Anspruch 1, **dadurch gekennzeichnet, dass** die doppelbindunghaltigen Kautschuke (A) NR, IR, BR, SBR, SIBR sind.

3. Kautschukmischungen nach Anspruch 1, **dadurch gekennzeichnet, dass** als Komponente (C) die Phenolharzedukte Phenol, Resorcin und Formaldehyd eingesetzt werden.

4. Kautschukmischungen nach Anspruch 3, **dadurch gekennzeichnet, dass** Formaldehyd in der Form von Paraformaldehyd oder Hexamethylentetramin eingesetzt wird.

5. Kautschukmischungen nach Anspruch 1, **dadurch gekennzeichnet, dass** als Komponente (C) kondensierte Phenolharze auf Basis von Phenol und/oder Resorcin und Formaldehyd eingesetzt werden.

6. Kautschukmischungen nach Anspruch 1, **dadurch gekennzeichnet, dass** sie noch zusätzlich Füllstoffe sowie Kautschukhilfsmittel enthalten.

7. Kautschukmischungen nach Anspruch 6, **dadurch gekennzeichnet, dass** sie als zusätzliche Füllstoffe Kieselsäure enthalten.

8. Kautschukmischungen nach Anspruch 6, **dadurch gekennzeichnet, dass** die Kieselsäure mit Bis(tri-ethoxy-silyl-propyl-disulfan) [Si®69 der Fa. Degussa-Hüls] aktiviert wird.

9. Verwendung der Kautschukmischungen nach Anspruch 1 zur Herstellung von Kautschukvulkanisaten bzw. von Kautschukformkörpern aller Art.

**Claims**

1. Rubber compounds consisting of uncrosslinked, double bond-containing rubbers (A), crosslinked rubber particles based on BR and SBR rubbers (B) and phenolic resin educts or condensed phenolic resins (C), whereby the double bond-containing rubbers (A) are present in quantities of 100 parts by weight, the crosslinked rubber particles (B) in quantities of 10 to 150 parts by weight and the phenolic resin educts or condensed phenolic resins (C) in quantities of 0.1 to 50 parts by weight.

2. Rubber compounds according to claim 1, **characterised in that** the double bond-containing rubbers (A) are NR, IR, BR, SBR, SIBR.

3. Rubber compounds according to claim 1, **characterised in that** the phenolic resin educts phenol, resorcinol and formaldehyde are used as component (C).

4. Rubber compounds according to claim 3, **characterised in that** formaldehyde is used in the form of paraformaldehyde or hexamethylene tetramine.

5. Rubber compounds according to claim 1, **characterised in that** condensed phenolic resins based on phenol and/or resorcinol and formaldehyde are used as component (C).

6. Rubber compounds according to claim 1, **characterised in that** they also contain additional fillers and rubber auxiliary substances.

7. Rubber compounds according to claim 6, **characterised in that** they contain silica as additional fillers.

8. Rubber compounds according to claim 6, **characterised in that** the silica is activated with bis(triethoxysilylpropyl disulfane) [Si®69 from Degussa-Hüls].

9. Use of the rubber compounds according to claim 1 to produce rubber vulcanisates or moulded rubber articles of any type.

**Revendications**

1. Compositions de caoutchouc consistant en caoutchoucs à doubles liaisons non réticulés (A), particules de caoutchoucs réticulées à base de caoutchoucs BR et SBR (B) et éduits de résines phénoliques ou résines phénoliques condensées (C), les caoutchoucs à doubles liaisons (A) étant présents en quantités de 100 parties en poids, les particules de caoutchoucs réticulées (B) en quantités de 10 à 150 parties en poids et les éduits de résines phénoliques ou résines phénoliques condensées (C) en quantités de 0,1 à 50 parties en poids.

2. Compositions de caoutchouc selon la revendication 1, **caractérisées en ce que** les caoutchoucs à doubles liaisons (A) sont des caoutchoucs NR, IR, BR, SBR, SIBR.

3. Compositions de caoutchouc selon la revendication 1, **caractérisées en ce que** le composant (C) consiste en les éduits de résines phénoliques : phénol, résorcinol et formaldéhyde.

4. Compositions de caoutchouc selon la revendication 3, **caractérisées en ce que** le formaldéhyde est mis en oeuvre sous la forme de paraformaldéhyde ou d'hexaméthylènetétramine.

5. Compositions de caoutchouc selon la revendication 1, **caractérisées en ce que** le composant (C) consiste en résines phénoliques condensées à base de phénol et/ou de résorcinol et de formaldéhyde.

6. Compositions de caoutchouc selon la revendication 1, **caractérisées en ce qu'**elles contiennent en outre des matières de charge et des produits auxiliaires pour caoutchouc.

7. Compositions de caoutchouc selon la revendication 6, **caractérisées en ce que** la matière de charge consiste en silice.

8. Compositions de caoutchouc selon la revendication 6, **caractérisées en ce que** la silice est activée par du bis(tri-éthoxy-silyl-propyl-disulfane) [produit du commerce Si®69 de la firme Degussa Hüls, Allemagne].

9. Utilisation des compositions de caoutchouc selon la revendication 1 pour la fabrication de vulcanisats de caoutchouc et d'objets moulés en caoutchouc de tous types.